# EUROPEAN PATENT SPECIFICATION

(11) **EP 2 867 979 B1**
(45) Date of publication and mention of the grant of the patent: **21.09.2016**
(21) Application number: 13734953.6
(22) Date of filing: 20.06.2013
(51) Int. Cl.: H02K 1/28, H02K 1/27, H02K 15/03

(54) **DEVICE AND PROCESS FOR MOUNTING PERMANENT MAGNETS IN AN ELECTRIC MOTOR ROTOR**
VORRICHTUNG UND VERFAHREN ZUR MONTAGE VON DAUERMAGNETEN BEI EINEM ROTOR EINES ELEKTROMOTORS
DISPOSITIF ET PROCÉDÉ DE MONTAGE D'AIMANTS PERMANENTS DANS UN ROTOR DE MOTEUR ÉLECTRIQUE

(30) Priority: 28.06.2012 BR 102012016090
(43) Date of publication of application: 06.05.2015
(73) Proprietor: Whirlpool S.A., 04578-000 São Paulo SP (BR)
(72) Inventor: VOLLRATH, Ingwald, Pirabeiraba CEP-89239-100 Joinville - SC (BR); BORTOLI, Marcos Giovani Dropa de, Condominio dos Lagos CEP-89221-100 Joinville (BR); FELDMANN, Alberto Bruno, CEP-89221-570 Joinville - SC (BR); FEUSER, Maikol, CEP-89207-680 Joinville - SC (BR)
(74) Representative: Soldatini, Andrea
(86) International application number: PCT/BR2013/000221
(87) International publication number: WO 2014/000071

(56) References cited:
- JP-A- H1 080 081
- JP-A- S6 173 559
- JP-A- S61 150 637
- US-A- 4 638 200
- US-A- 5 170 085
- US-A- 5 744 887
- US-A- 5 903 083
- US-B1- 6 339 274
- US-B1- 6 737 780

## Description

### Field of the Invention

The present invention refers to a process for mounting permanent magnets in an electric motor rotor and is intended, more specifically, to hermetic motor-compressor, which was conceived and developed to provide greater reliability to the assembly, since it is a technical solution capable of absorbing, more appropriately, the dimensional variations of the components involved and allows the use of high speed motor.

### Background of the Invention

As is known in the state of art, the electric motors are generally constituted by stators and rotors that operate with magnetic elements to produce the required torque to its operation / rotor rotation.

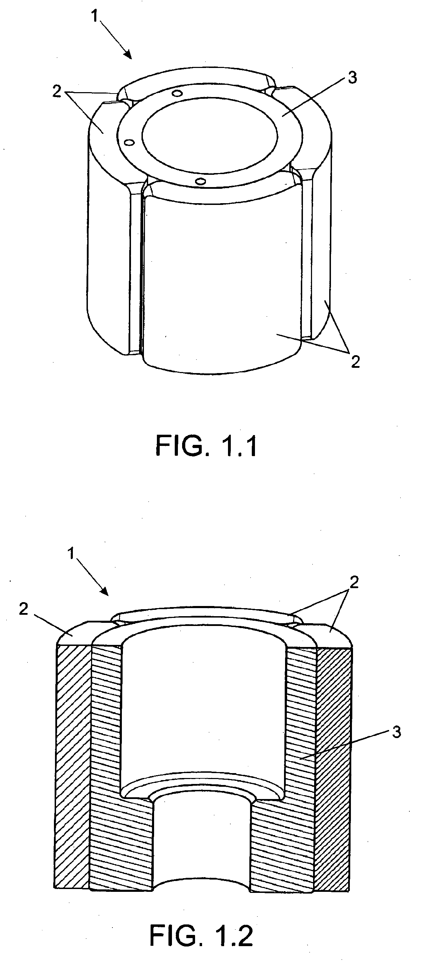

The attached Figures 1.1 and 1.2 illustrate a conventional rotor 1 in which four magnets 2 are fixed to the metal rotor core 3 by means of an adhesive layer, such construction being described, for example, in document US 6,339,274. Occurs, however, that this configuration/assembly shows a serious drawback of limiting the maximum speed that the rotor can achieve, because the centrifugal force, formed by the rotation of the rotor itself and by the mass of each magnet, exert ultimately a tensile stress in the adhesive joint which, in turn, has a breaking point determined by the adhesive or the magnet resistance. Thus, if the rotation of the rotor provides a load at the adhesion region between the magnet 2 and the metal core 3 above the limit of material strength in the joint, the adhesive layer 4 or even the magnet 2 will rupture and hence the magnets 2 will fall off of the metal core 3 and thus impairing the operation of the motor which can lead to serious damages in the safety of the motor. It is important to mention that the amount of raw material used for mounting the motor has a first-order inverse relationship to its rotation. For example, doubling the rotation of the rotor leads to a 50% decrease in mass of raw material used for mounting it, and maintaining the same electrical characteristics of the motor. Obviously, the maximum rotation of the motor has a significant relationship with its cost and thus, it is extremely important to enable the use of high speed motors.

In an attempt to solve such a problem, the metallic covers 5 have been used as shown in Figures 2.1 and 2.2 - and described, for example, in document US 5,170,085 - which are generally made from non-magnetic stainless steel to minimize the electrical losses in the motor. Therefore, such covers 5 are coupled to the rotor 1 to cover the magnets 2 aiming at increasing the mechanical resistance of the assembly and prevent the detachment of the two magnets 2, thus allowing the motor to run at high speed.

The main disadvantage of this solution, however, is the need for dimensional precision of the components involved - specially the magnets 2, since in order to attach the cover 5 around the second magnet assembly 2, there must be a difference of dimension between the components, that is, the outer diameter of magnets mounted on a metal core and the inner diameter of the cover, compatible with the process used for mounting, for example by heating the cover, and or cooling the magnets assembly and the inner core or by cold insertion. Thus, it is necessary to use components provided by an accurate production or use other means of production, in order to adjust the necessary dimensions for the required mounting, it consequently increases the cost of the solution, as shown in Figures 1.1 and 1.2. The claim that this solution requires a dimensional accuracy refers exclusively to covers solutions that use solid or non-solid rings. Namely, it is applied to claims 1 to 3 of the document US 5,744,887. To reduce the dimensional precision of the components, it is possible to design the components involved, so that there is always a gap between the outer diameter of magnets mounted on the metal core and the inner diameter of the cover, in such a way as to fill the voids with some type of resin. However it significantly increases the air gap of the motor, reducing its energy efficiency, as well as requiring mounting devices to ensure the concentricity between the components, and a cost increase derived of the need of using the resin. Moreover, these covers 2 are typically produced in metallic plates jointed -together by welding ends, which generates a transverse segment of the mass and differentiated thickness that eventually cause difficulties for the assembly mounting, together with an imbalance in the system during the operation. Another disadvantage of using the metallic cover is that even using non-ferromagnetic materials with high electrical resistivity, there are eddy currents, which leads to a loss of energy efficiency of the electric motor.

The cover disclosed in the document US 5,744,887 aims to solve the problem of the dimensional rigidity required by the use of metallic covers, in proposing the use of an long non-metallic strip disposed over the magnets in the form of overlapping windings, but the overlapping windings incurres in a significantly higher thickness cover that ultimately compromise the proper functioning and the efficiency of the motor. Moreover, this solution also has the disadvantage that, although being minimized, yet provide the eddy current mentioned in the preceding paragraph.

Document US 4,638,200 also describes a device for mounting permanent magnets in a rotor, wherein the magnets are surrounded by an elastic element.

Therefore, it is noted that the current state of art lacks of solutions for mounting the magnets in the metal rotor core without compromising with it, the energy efficiency of the motor, the balancing and the system safety.

### Aims of the invention

Therefore, one aim of this invention is to provide a device and a process for mounting permanent magnets in electric motor rotors that provides an appropriate mounting of the metal core magnets in the rotor by means of an element of minimal thickness, and also a geometric configuration that reduces the losses from eddy currents in order to maximize the energy efficiency of the motor, and not requiring an increased dimensional accuracy between the components involved.

Moreover, an other aim of the present invention is to provide a device and process for mounting permanent magnets in electric motor rotors with easier production and installation.

Other aim of the present invention is to provide a device and a process for mounting permanent magnets in electric motor rotors that can be adequately used without covering the entire surface of the magnets, thus using less raw material for its production and thus reducing the costs involved.

### Summary of the Invention

The above objectives are achieved through a device for mounting permanent magnet in electric motor rotors, where said motors comprise a rotor composed of a magnet-coated metal core, characterized by the fact that said device comprises at least one helical elastic element disposed around the magnets, where the latter must necessarily be suitable for the resilient mounting in the system and must be a non-magnetic iron material with high electrical resistivity so as not impairing the electrical efficiency of the motor, and the diameter of said helical elastic element must be smaller than the outer diameter of the magnet assembly positioned on the outer surface of the mental core, the windings of at least one helical elastic element must maintain visible the portions of the outer surface of the magnet assembly.

Preferably, at least part of the helical elastic element is mounted in the magnets by means of its elastic force, through the use of adhesive, fixing elements or end forming, so that they cooperate with magnets or with the metal core so as to exert a force toward the attachment of the magnets to the metal core, in opposition to the effect of centrifugal force when the motor is running.

In the case of using adhesive for fixing the helical elastic element to the magnets, it can be preferably applied to the outer surface of the magnets, to be applied to the inner surface of the helical elastic element, or both, and may be applied only to the ends of helical elastic element.

The present invention also comprises a process for mounting permanent magnets in electric motor rotors, which includes the following steps:
- Constructing a helical elastic element with a diameter smaller than the outer diameter of the magnet assembly positioned on the outer surface of the metal core;
- Elastically expanding the helical elastic element;
- Engaging the helical elastic element around the magnet assembly to enable that the elastic force of the a helical elastic element causes the latter be rigidly molded to the outer diameter of the magnet assembly.

Preferably, the said process further comprises the step of mounting the helical elastic element with the magnet assembly through the use of adhesive, fixing elements or end forming of the helical elastic element.

### Brief Description of the Drawings

The present invention will be described in more detail below based on the drawings. The Figures show:
Figures 1.1 and 1.2 - is a perspective view and section of a rotor of the current state of art;
Figures 2.1 and 2.2 - another embodiment used in the current state of art in the exploded perspective view of the mounted assembly;
Figure 3 - An exploded perspective view of the device for mounting the permanent magnets in electric motor rotors of the present invention;
Figure 4 - the device that is the object of the present invention suitably coupled to na electric motor rotor;
Figures 5.1 and 5.2 - show two possible variants for the mounting process that is object of the present invention, while Figure 5.1 shows the device anchored in a cutout of the magnetic core, while in Figure 5.2, the mounting device is anchored in the space between the magnets, and
Figure 6 - shows another embodiment in which the mounting device is fixed to the magnetic core through a rivet.

### Detailed Description of the Invention

The invention will now be described in detail based on the drawings, to which numerical references will be allocated in order to facilitate its understanding.

Initially it is clear that the device for mounting the permanent magnets in electric motor rotors, which is the object of the present invention, is destined, primarily, to the use in electric motor comprising a rotor 1 composed of a magnet-coated (3) metal core (2).

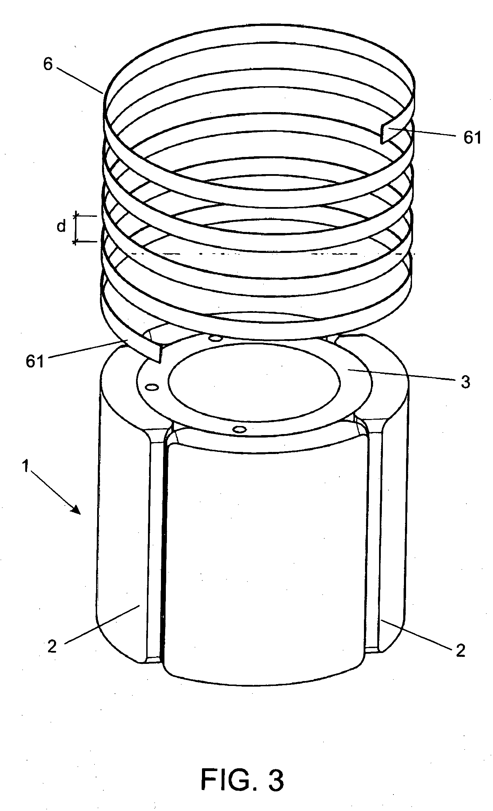

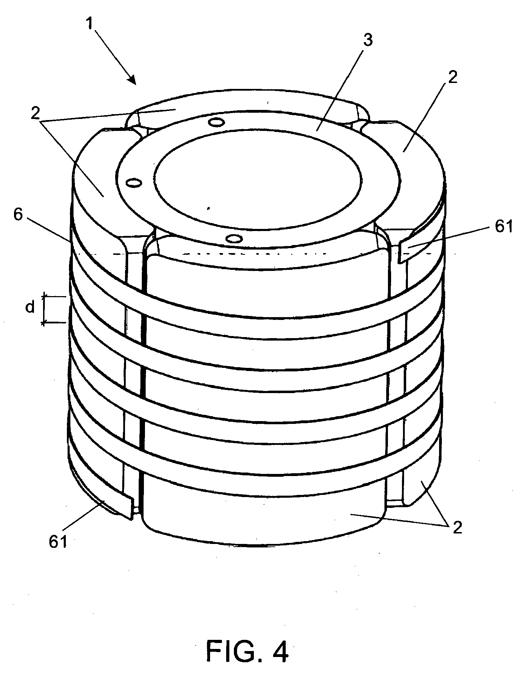

As can best be seen in Figures 3 and 4, the preferential embodiment of the invention, the device for mounting the permanent magnets in electric motor rotors comprises a helical elastic element 6 disposed around the magnets 3, and preferably the diameter of the helical elastic element 6 is, significantly or not, smaller than the outer diameter of the magnet assembly 3, which are positioned over the outer surface of the metal core 2. Furthermore, the paces between the windings of the helical elastic element 6 are distant from each other by a distance d so as to maintain visible the portions of the outer surface of the magnet (3) assembly.

With the proposed embodiment, the element 6 - which has been made by a metallic cover 5 in the current state of art - and aims to increase the mechanical resistance of mounting the magnet assembly 3, has the shape of a flat helix winding coil which can elastically deform and "copy" the external dimension of the rotor 1.

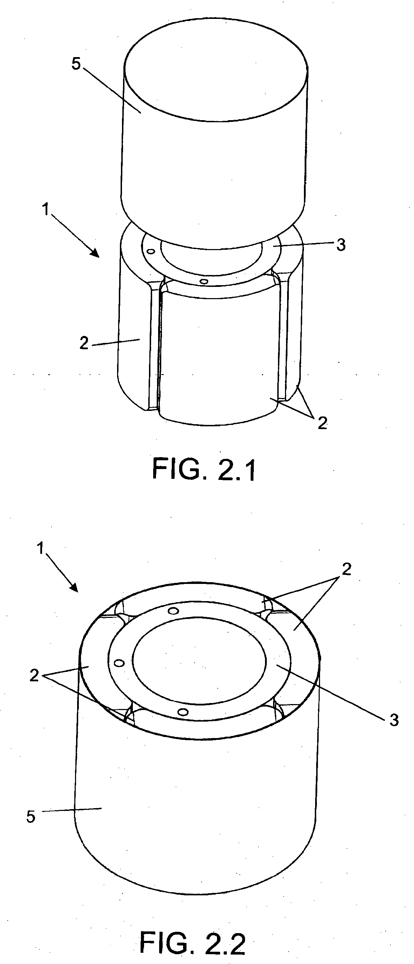

For mounting the elastic element 6 in the magnets 3, it is elastically opened until it reaches a diameter greater than the rotor 2 / magneto 3 for then be released and positioned on the assembly. The elasticity of the elastic element 6 provides it with the capacity to mold itself to the outer diameter of the magnets 3 at a magnitude of diameter variation of at least one order of magnitude higher than the resolution of cover-piece 5 shown in Figures 2.1 and 2.2 - namely, the winding constant of the elastic element 6 in the form of winding coils leads to a firmly compression of their windings against the magnets 3 independently of their dimensional variation, thus eliminating the remaining voids between the parts that currently requires to be filled with resin or similar materials.

Therefore, the residual stress in the elastic element 6 due to the differential dimension in respect to its original state is sufficient to keep it in position and, possibly, sufficient to ensure the mechanical resistance required for the functioning of the motor, depending on the rigidity of said helical elastic element 6.

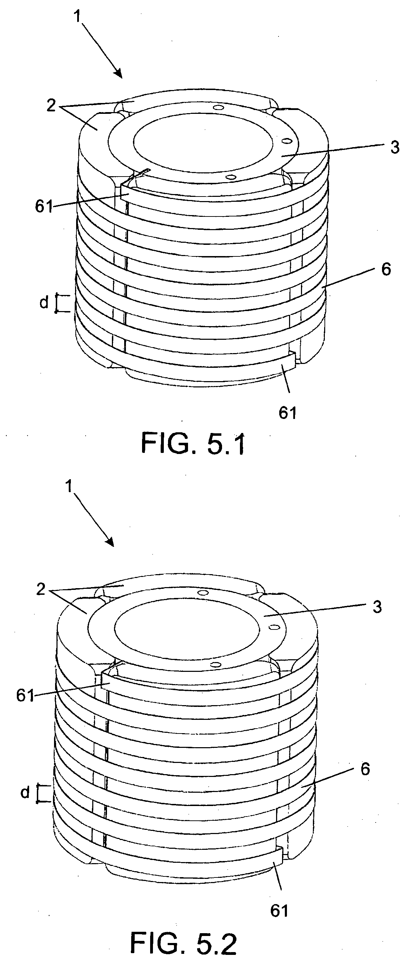

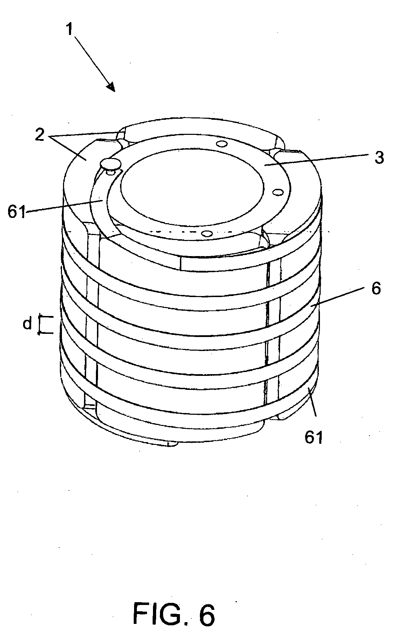

It should be noted that the preferred proposed embodiment aims, basically, to increase the mounting resistance of the magnets 3 to the centrifugal force. However, if a more robust mounting is identified the following options for mounting can be used
1 - Use of adhesive. One can apply adhesive onto the outer surface of the magnets 3, onto the surface of the internal helical elastic element 6, or both. The adhesive may be applied over the entire inner surface of the helical elastic element 6 or only the two ends 61 thereof into an area sufficient sufficient to ensure the mechanical resistance required for the mounting the magnets 3. It should be noted that the process of applying the adhesive can be manual, automatic, or chemically applied to the elastic element 6, a process is a similar to that applied in enameled wires, called "thermal cementable".
2 - Mechanical Fixing. The mechanical mounting of the helical elastic element 6 can be guaranteed by any attachment elements intended to constitute latches at its ends with a mechanical solution comprised of screw, rivet or like elements, or even by a end forming 61 of the elastic element 6 , as a hook-shaped form, for example. The important thing is to ensure that the elastic element 6 is rigidly mounted in the rotor core 1. Such constructive alternatives are shown in Figures 5.1, 5.2 and 6 attached, and it is important to emphasize that these can optionally use adhesive as auxiliary resources for mounting.

The present invention also comprises a process for mounting permanent magnets in electric motor rotors, which comprises the following steps:
- constructing the helical elastic element with a diameter smaller than the outer diameter of the magnet assembly (3) positioned on the outer surface of the metal core;
- elastically expanding the helical elastic element;
- engaging the helical elastic element around the magnet assembly to enable that the elastic force of the helical elastic element causes the latter be rigidly molded to the outer diameter of the magnet assembly.

Preferably, the said process further comprises the step of mounting the helical elastic element 6 with the magnet assembly 3 through the use of adhesive, fixing elements or end forming 61 of the helical elastic element 6.

It is noteworthy that although the preferred embodiments for mounting have been shown in the present invention, it is understood that any omissions, substitutions and constructive alterations can be made by a person skilled in the art without moving apart from the spirit and scope of the claimed protection. It is also expressly stated that all combinations of those elements that substantially perform the same function in the same way to achieve the same results are within the scope of the invention. Substitutions of elements of a type described by others are also fully intended and contemplated.

## Claims

1. Device for mounting magnets in an electric motor rotor, which said motor comprises a rotor (1) composed of a metal core (2) coated by a magnet assembly (3),
wherein said device comprises at least a helical elastic element (6) arranged around the magnet assembly (3), and
- the diameter of said at least one helical elastic element (6) is smaller than the outer diameter of the magnet assembly (3) positioned on the outer surface of the metal core (2);
- the paces between the windings of at least one helical elastic element (6) are distant from each other so as to maintain visible the portions of the outer surface of the magnet assembly (3).

2. Device according to claim 1, **CHARACTERIZED by** the fact that at least one helical elastic, element (6) is fixed to the magnet assembly (3) through their elastic force.

3. Device according to claim 1, **CHARACTERIZED by** the fact that at least one helical-elastic element (6) is fixed to the magnet assembly (3) through the use of an adhesive material.

4. Device according to claim 3, **CHARACTERIZED by** the fact that at least the adhesive material for mounting between at least one helical elastic element (6) and the magnet assembly (3) is applied onto the outer surface of the magnet assembly (3).

5. Device according to claim 3, **CHARACTERIZED by** the fact that the adhesive material for mounting between at least one helical elastic element (6) and the magnet assembly. (3) is applied onto the inner surface of at least one helical elastic element (6).

6. Device according to claim 3, **CHARACTERIZED by** the fact that the adhesive material for mounting between at least one helical elastic element (6) and the magnet assembly (3) is applied to the ends (61) of at least one helical elastic element (6)

7. Device according to claim 1, **CHARACTERIZED by** the fact that at least one helical elastic element (6) is fixed to the magnet assembly (3) by means of fixing elements.

8. device according to claim 1, **CHARACTERIZED by** the fact that at least one hellical elastic element (6) is fixed to the magnet assembly (3) by end forming (61) so that they cooperate with the magnets assembly (3) or the metal core (2).

9. Process for mounting magnets in an electric motor rotor, which said motor comprises a rotor (1) composed of a metal core (2) coated by a magnet assembly (3), **CHARACTERIZED by** the fact that said process comprises the following steps:
- construct a helical elastic element (6) with a diameter smaller than the outer diameter of the magnet assembly (3) positioned on the outer surface of the metal core (2);
- elastically expanding the helical elastic element (6);
- engaging the helical elastic element (6) around the magnet assembly (3) assembly to enable that the elastic force of the helical elastic element (6) causes the latter be rigidly molded to the outer diameter of the magnet assembly (3).

10. Process according to claim 9, **CHARACTERIZED by** the fact that it further comprises the step of mounting the helical elastic element (6) in the magnet assembly (3) by adhesive, fixing elements or end forming (61) of the helical elastic element (6).

## Patentansprüche

1. Vorrichtung zum Montieren von Magneten in einem Rotor eines Elektromotors, wobei der Motor einen Rotor (1) enthält, der aus einem Metallkern (2) besteht, der mit einem Magnetaufbau (3) beschichtet ist,
wobei
die Vorrichtung wenigstens ein spiralförmiges Elastikelement (6) enthält, das um den Magnetaufbau (3) herum angeordnet ist, und
- der Durchmesser des wenigstens einen spiralförmigen Elastikelements (6) kleiner als der äußere Durchmesser des Magnetaufbaus (3) ist, der an der äußeren Oberfläche des Metallkerns (2) positioniert ist;
- die Gänge zwischen den Windungen des des wenigstens einen spiralförmigen Elastikelements (6) voneinander beabstandet sind, um die Teile der äußeren Oberfläche des Magnetaufbaus (3) sichtbar beizubehalten.

2. Vorrichtung nach Anspruch 1, **GEKENNZEICHNET durch** die Tatsache, dass wenigstens ein spiralförmiges Elastikelement (6) an dem Magnetaufbau (3) **durch** seine elastische Kraft fixiert ist.

3. Vorrichtung nach Anspruch 1, **GEKENNZEICHNET durch** die Tatsache, dass wenigstens ein spiralförmiges Elastikelement (6) an dem Magnetaufbau (3) **durch** die Verwendung eines adhäsiven Materials fixiert ist.

4. Vorrichtung nach Anspruch 3, **GEKENNZEICHNET durch** die Tatsache, dass wenigstens das adhäsiven Material zum Montieren zwischen wenigstens einem spiralförmigen Elastikelement (6) und dem Magnetaufbau (3) auf die äußere Oberfläche des Magnetaufbaus (3) aufgebracht wird.

5. Vorrichtung nach Anspruch 3, **GEKENNZEICHNET durch** die Tatsache, dass wenigstens das adhäsiven Material zum Montieren zwischen wenigstens einem spiralförmigen Elastikelement (6) und dem Magnetaufbau (3) auf die innere von wenigstens einem spiralförmigen Elastikelement (6) aufgebracht wird.

6. Vorrichtung nach Anspruch 3, **GEKENNZEICHNET durch** die Tatsache, dass wenigstens das adhäsiven Material zum Montieren zwischen wenigstens einem spiralförmigen Elastikelement (6) und dem Magnetaufbau (3) auf die Enden (61) von wenigstens einem spiralförmigen Elastikelement (6) aufgebracht wird.

7. Vorrichtung nach Anspruch 1, **GEKENNZEICHNET durch** die Tatsache, dass wenigstens ein spiralförmiges Elastikelement (6) an dem Magnetaufbau (3) mittels Fixierelementen fixiert ist.

8. Vorrichtung nach Anspruch 1, **GEKENNZEICHNET durch** die Tatsache, dass wenigstens ein spiralförmiges Elastikelement (6) an dem Magnetaufbau (3) **durch** eine Endausgestaltung (61) fixiert ist, so dass mit dem Magnetaufbau (3) oder dem Metallkern (2) zusammenwirkt.

9. Verfahren zum Montieren von Magneten in einem Rotor eines Elektromotors, wobei der Motor einen Rotor (1) enthält, der aus einem Metallkern (2) besteht, der mit einem Magnetaufbau (3) beschichtet ist, **GEKENNZEICHNET durch** die Tatsache, dass das Verfahren die folgenden Schritte enthält:
- Erstellen eines spiralförmigen Elastikelements (6) mit einem Durchmesser, der kleiner als der äußere Durchmesser des Magnetaufbaus (3) ist, an der äußeren Oberfläche des Metallkerns (2) positioniert;
- elastisches Ausdehnen des spiralförmigen Elastikelements (6);
- in Eingriff Bringen des spiralförmigen Elastikelements (6) um die Baugruppe mit dem Magnetaufbau (3), um zu ermöglichen, dass die elastische Kraft des spiralförmigen Elastikelements (6) das letztere veranlasst, fest an dem äußeren Durchmesser des Magnetaufbaus (3) angepresst zu sein.

10. Verfahren nach Anspruch 9, **GEKENNZEICHNET durch** die Tatsache, dass es ferner den Schritt des Montierens des spiralförmigen Elastikelements (6) in dem Magnetaufbau (3) **durch** Adhäsiv, Fixierelemente oder Endausgestaltung (61) des spiralförmigen Elastikelements (6) enthält.

## Revendications

1. Dispositif pour le montage d'aimants dans un rotor de moteur électrique, ledit moteur comprenant un rotor (1) constitué d'un noyau métallique (2) revêtu d'un assemblage d'aimants (3), dans lequel ledit dispositif comprend au moins un élément élastique hélicoïdal (6) disposé autour de l'assemblage d'aimants (3), et
- le diamètre du dit au moins un élément élastique hélicoïdal (6) est plus petit que le diamètre extérieur de l'assemblage d'aimants (3) positionné sur la surface extérieure du noyau métallique (2) ;
- des espaces existent entre les enroulements d'au moins un élément élastique hélicoïdal (6) qui donc sont distants les uns des autres de manière à maintenir visible les parties de la surface extérieure de l'assemblage d'aimants (3).

2. Dispositif selon la revendication 1, caractérisé du fait qu'au moins un élément élastique hélicoïdal (6) est fixé à l'assemblage d'aimants (3) grâce à sa force élastique.

3. Dispositif selon la revendication 1, **caractérisé par le fait qu'**au moins un élément élastique hélicoïdal (6) est fixé à l'assemblage d'aimants (3) au moyen de l'utilisation d'un matériau adhésif.

4. Dispositif selon la revendication 3, **caractérisé par le fait que** le matériau adhésif pour le montage entre au moins un élément élastique hélicoïdal (6) et l'assemblage d'aimants (3) est appliqué sur la surface extérieure de l'assemblage d'aimants (3).

5. Dispositif selon la revendication 3, **caractérisé par le fait que** le matériau adhésif pour le montage entre au moins un élément élastique hélicoïdal (6) et l'assemblage d'aimant (3) est appliqué sur la surface intérieure du dit au moins un élément élastique hélicoïdal (6).

6. Dispositif selon la revendication 3, **caractérisé par le fait que** le matériau adhésif pour le montage entre au moins un élément élastique hélicoïdal (6) et l'assemblage d'aimants (3) est appliqué aux extrémités (61) du au moins un élément élastique hélicoïdal (6).

7. Dispositif selon la revendication 1, caractérisé du fait qu'au moins un élément élastique hélicoïdal (6) est fixé à l'assemblage d'aimants (3) au moyen d'éléments de fixation.

8. Dispositif selon la revendication 1, **caractérisé par le fait qu'**au moins un élément élastique hélicoïdal (6) est fixé à l'assemblage d'aimants (3) au moyen d'un pliage de ses extrémités (61) afin qu'elles coopèrent avec l'assemblage d'aimant (3) ou le noyau métallique (2).

9. Procédé pour le montage d'aimants dans un rotor de moteur électrique, ledit moteur comprenant un rotor (1) constitué d'un noyau métallique (2) revêtu d'un assemblage d'aimants (3), **caractérisé par le fait que** ledit procédé comprend les étapes suivantes :
- réaliser un élément élastique hélicoïdal (6) avec un diamètre plus petit que le diamètre extérieur de l'assemblage d'aimants (3) positionné sur la surface extérieure du noyau métallique (2) ;
- élargir élastiquement l'élément élastique hélicoïdal (6) ;
- engager l'élément élastique hélicoïdal (6) autour de l'assemblage d'aimants (3) afin de permettre à la force élastique de l'élément élastique hélicoïdal (6) de mouler rigidement ce dernier sur le diamètre extérieur de l'assemblage d'aimants (3).

10. Procédé selon la revendication 9, caractérisé du fait qu'il comprend en outre l'étape de montage de l'élément élastique hélicoïdal (6) sur l'assemblage d'aimants (3) à l'aide d'un adhésif, d'éléments de fixation ou d'un pliage des extrémités (61) de l'élément élastique hélicoïdal (6).
